# EUROPÄISCHE PATENTSCHRIFT

(11) **EP 0 940 356 B1**
(45) Veröffentlichungstag und Bekanntmachung des Hinweises auf die Patenterteilung: **15.10.2003**
(21) Anmeldenummer: 98890383.7
(22) Anmeldetag: 30.12.1998
(51) Int. Cl.: B65G 51/06

(54) **Hülse für eine Rohrpostanlage**
Carrier for a tube mail
Cartouche pour système de courrier par tube

(30) Priorität: 06.03.1998 AT 39698
(43) Veröffentlichungstag der Anmeldung: 08.09.1999
(73) Patentinhaber: Sumetzberger, Gerhard, 1110 Wien (AT)
(72) Erfinder: Sumetzberger, Gerhard, 1110 Wien (AT)
(74) Vertreter: Müllner, Erwin, Dr.

(56) Entgegenhaltungen:
- DE-A- 4 111 492
- DE-U- 29 708 204
- US-A- 3 788 577
- US-A- 4 362 443

## Beschreibung

Die vorliegende Erfindung betrifft eine Hülse für eine Rohrpostanlage, bestehend aus einem zylindrischen Hülsenrohr, einem unteren Hülsenkopf und einem oberen Hülsenkopf, wobei der untere und der obere Hülsenkopf jeweils einen Gleitring aufweisen und wobei der obere Hülsenkopf einen Deckel aufweist, der um eine Achse, die am Rand der Hülse parallel zur Längsachse der Hülse angeordnet ist, schwenkbar gelagert ist.

Eine derartige Hülse ist aus DE 297 08 204 U1 bekannt. Dadurch, dass die Achse parallel zur Längsachse der Hülse ist, schwenkt der Deckel quer zur Längsachse auf und zu. Dies bewirkt eine einfache Handhabung, verhindert weitestgehend Beschädigungen des zu transportierenden Gutes beim Öffnen oder Schließen und ermöglicht ein schonendes Laden und Entladen des Gutes. Eine ähnliche Hülse ist aus US 4 362 443 A bekannt. Hier weist der Deckel einen Vorsprung und der Hülsenkopf eine Ausnehmung auf, sodass der geschlossene Deckel in Richtung der Längsachse fixiert ist. Gleiches gilt für die DE 41 11 492 A1.

Aus der US 5 636 947 A ist bereits bekannt, dass es für Rohrpostanlagen von Spitälern und ähnlichen Einrichtungen wichtig ist, dass die Hülsen dicht verschließbar sind. In Spitälern werden nämlich oft Blutproben, Medikamente, Infusionslösungen und ähnliches mit der Rohrpost transportiert. So werden z.B. mit Blutproben gefüllte Teströhrchen in eine entsprechend adaptierte Hülse eingesetzt und mit Klammern fixiert. Der Sinn der Fixierung besteht darin, einen Bruch der Röhrchen zu vermeiden. Wenn sie brechen (oder ein Verschlussstopfen aufgeht), rinnt der Inhalt in das Innere der Hülse, und von dort könnten sie in das Rohr der Rohrpostanlage austreten, wenn die Hülse nicht dicht verschlossen ist. Dadurch können die Rohre der Rohrpostanlagen kontaminiert werden (z.B. mit Aids oder anderen Viren oder Bakterien), wodurch die Rohre Nährböden für Bakterien und Viren werden und alle weiteren Hülsen, die durch die Rohre transportiert werden, außen kontaminieren. Die Gefahr, dass dadurch Krankheiten rasch verbreitet werden, ist groß.

Hinzu kommt noch ein technisches Problem: die ausgetretenen Flüssigkeiten werden rasch zähflüssig und klebrig und behindern somit den leichten Durchgang der Hülsen durch die Rohre.

Wenn daher eine Flüssigkeit aus einer Hülse austritt, muss das Rohr sofort gereinigt und desinfiziert werden, was eine entsprechend lange Abschaltung der Rohrpostanlage in diesem Bereich nötig macht und entsprechende Wartungskosten mit sich bringt.

Diese Probleme können vermieden werden, wenn die Hülse dicht verschließbar ist. Wenn es in einer solchen Hülse zu einem Glasbruch kommt (oder ein Verschlussstopfen aufgeht, z.B. infolge der hohen Beschleunigungs- und Bremskräfte), dann bleibt die Flüssigkeit innerhalb der Hülse, und es ist nur notwendig, diese eine Hülse zu reinigen und zu desinfizieren.

Die in der US 5 636 947 A beschriebene dicht verschließbare Hülse ist in Längsrichtung zweigeteilt, und die beiden Teile sind über ein Scharnier, das parallel zur Längsachse der Hülse liegt, miteinander verbunden. Die Hülse lässt sich somit aufklappen, ohne dass ein eigener Deckel vorhanden ist.

Nachteilig dabei ist, dass eine derartige Hülse schwierig zu handhaben ist. Zum Beladen und Entladen des Gutes muss sie aus der Station herausgenommen und hingelegt werden. Im Gegensatz dazu können Hülsen der eingangs genannten Art in entsprechend ausgebildeten Stationen, wo die Stirnseite der Hülse zugänglich ist, belassen werden. Man kann in der Station den Deckel öffnen und das zu transportierende Gut entnehmen oder einladen. Dies ist oft mit nur einer Hand möglich.

Es ist Aufgabe der vorliegenden Erfindung, eine Hülse der eingangs genannten Art so weiterzubilden, dass sie dicht verschließbar ist.

Diese Aufgabe wird durch eine Hülse der eingangs genannten Art erfindungsgemäß dadurch gelöst, dass zwischen dem Deckel und dem oberen Hülsenkopf eine Dichtung vorgesehen ist und dass der Deckel bzw. der obere Hülsenkopf mehrere über den Umfang verteilte Vorsprünge normal zur Längsachse der Hülse aufweist, die bei geschlossenem Deckel in mehrere Ausnehmungen im oberen Hülsenkopf bzw. im Deckel eingreifen, um den Deckel in Richtung der Längsachse zu fixieren.

Im Rahmen der vorliegenden Erfindung wurde gefunden, dass das Vorsehen einer Dichtung zwischen dem Deckel und dem oberen Hülsenkopf nicht ausreicht, um eine dichte Hülse zu erhalten. Bei den in einer Rohrpostanlage auftretenden hohen Beschleunigungen und Verzögerungen bewirkt die Trägheit des Deckels, dass dieser vom Hülsenkopf abhebt und nicht mehr an der Dichtung anliegt, einerseits infolge der Elastizität der Achse und des unvermeidlichen Lagerspiels, anderseits infolge der Elastizität des Deckels selbst. Erfindungsgemäß ist daher zusätzlich vorgesehen, dass der Deckel und/oder der obere Hülsenkopf über den Umfang verteilte Vorsprünge normal zur Längsachse der Hülse aufweisen. Diese Vorsprünge greifen in Ausnehmungen ein, die im jeweils anderen Teil vorgesehen sind. Auf diese Weise wird der Deckel in Längsrichtung der Hülse zuverlässig fixiert, sodass er nicht von der Dichtung abheben oder sich auch nur die Vorspannung der Dichtung verringern kann. Anstelle mehrerer über den Umfang verteilter Vorsprünge kann auch nur ein entsprechend langer Vorsprung vorgesehen sein, der in eine entsprechend lange Ausnehmung eingreift.

Es ist zweckmäßig, wenn der Deckel in Schließrichtung vorne einen oder mehrere Vorsprünge und in Schließrichtung hinten eine oder mehrere Ausnehmungen hat, wobei an den entsprechenden Stellen im Hülsenkopf die zugehörige Ausnehmung bzw. die zugehörigen Ausnehmungen und der zugehörige Vorsprung bzw. die zugehörigen Vorsprünge vorgesehen sind. Auf diese Weise ragen alle Vorsprünge von der Längsachse der Hülse weg, also nach außen. Dies ist herstellungstechnisch günstig: da sowohl der Deckel als auch der Hülsenkopf durch Spritzguss hergestellt werden, ist es günstig, an diesen Teilen möglichst keine nach innen ragenden Vorsprünge vorzusehen; andernfalls ist eine Innenform notwendig, die kompliziert kollabierbar und somit sehr teuer ist.

Nach einer bevorzugten Ausführungsform ist vorgesehen, dass der Deckel nicht nur um die Achse drehbar, sondern auch in Richtung der Achse verschiebbar ist, dass er durch eine Feder in Richtung zum Hülsenrohr vorgespannt ist und dass im Deckel oder im oberen Hülsenkopf zumindest eine schräge Gleitfläche vorgesehen ist, in die bei geschlossenem Deckel ein Vorsprung des oberen Hülsenkopfes bzw. des Deckels ragt, sodass beim Verschwenken in die Offenstellung der Deckel vom oberen Hülsenkopf abhebt.

Wenn der Deckel nicht in Achsrichtung verschiebbar ist, so gleitet er während der gesamten Schwenkbewegung des Öffnens bzw. Schließens auf der Dichtung, was nicht nur die Bewegung schwergängig macht, sondern auch zu einem frühzeitigen Verschleiß der Dichtung führt. Bei dieser bevorzugten Ausführungsform wird aber nun der Deckel beim Öffnen infolge der Gleitfläche entgegen der Kraft der Feder angehoben, bis der Deckel die Dichtung nicht mehr berührt. Auf diese Weise wird die Dichtung fast nicht auf Scherung beansprucht. Wenn der Deckel soweit angehoben ist, kann der Vorsprung außer Eingriff mit der Gleitfläche kommen. Der Deckel schwenkt dann relativ leichtgängig normal zur Längsachse der Hülse in die Offenstellung. Durch diese Ausführungsform werden also die beiden genannten Nachteile vermieden, außerdem werden aber zusätzlich entscheidende Vorteile erzielt: Durch die Vorspannung des Deckels zusammen mit der schrägen Gleitfläche wird bewirkt, dass der Deckel automatisch von der Feder in die Schließstellung gedrückt wird, solange der Vorsprung in Eingriff mit der Gleitfläche steht. Dadurch ist es nicht möglich, dass die Hülse geringfügig geöffnet bleibt und somit nicht dicht ist. In der Praxis macht man die Gleitfläche natürlich so lang, dass in der kleinsten stabilen Offenstellung der Deckel bereits so weit aufgeschwenkt ist, dass die Hülse nicht mehr in das Rohr der Rohrpostanlage eingesetzt werden kann. Auf diese Weise ist es sowohl unmöglich, dass eine nicht dicht verschlossene Hülse weggeschickt wird, und es ist auch unmöglich, dass eine Hülse in der Rohrpostanlage unbeabsichtigt öffnet. Die Hülse wird daher immer automatisch dicht verschlossen, ohne dass die Betätigung eines eigenen Verriegelungsmechanismus notwendig ist, wie er bei der US 5 636 947 A vorgesehen werden muss. (Diese Hülse würde ohne Verriegelungsmechanismus sofort öffnen, wenn sie aus der Rohrpostanlage entnommen wird.)

Es ist zweckmäßig, wenn zwei Gleitflächen zu beiden Seiten der Achse im Deckel vorgesehen sind, die mit Hebekeilen im oberen Hülsenkopf zusammenwirken. Diese symmetrische Anordnung bezüglich der Achse bewirkt, dass der Deckel während der gesamten Schwenkbewegung immer normal zur Längsachse der Hülse bleibt, was ein zuverlässiges Schließen sicherstellt. Mit nur einer Gleitfläche könnte es durch die Elastizität der beteiligten Elemente und das unvermeidliche Lagerspiel zu einer leicht schrägen Lage des Deckels kommen, wodurch die Vorsprünge beim Eintauchen in die Ausnehmungen verkannten könnten.

Es ist zweckmäßig, wenn die Dichtung im oberen Hülsenkopf angeordnet ist und einen Abstand zum oberen Rand des oberen Hülsenkopfes aufweist, und dass der Deckel einen Vorsprung aufweist, der in der Schließstellung des Deckels auf die Dichtung drückt. Auf diese Weise werden unbeabsichtigte Beschädigungen der Dichtung sehr unwahrscheinlich. Würde die Dichtung über den oberen Rand des oberen Hülsenkopfes hinausragen, so könnte es wesentlich leichter beim Be- oder Entladen der Hülse zu einer Beschädigung der Dichtung kommen, z.B. indem man mit einem scharfkantigen Ladegut über die Dichtung schleift.

Nach einer besonderen Ausgestaltung ist vorgesehen, dass die Dichtung eine dem Deckel zugekehrten Dichtfläche aufweist, von der eine Lasche zur dichtenden Anlage am oberen Hülsenkopf ausgeht, dass die Lasche Vorsprünge aufweist, die zur Fixierung der Dichtung in entsprechenden Ausnehmungen im oberen Hülsenkopf eingreifen, dass innerhalb der Lasche ein Metallring liegt und dass vorzugsweise in die Vorsprünge der Dichtung entsprechende Vorsprünge des Metallringes ragen.

Diese Ausführung ermöglicht es, die Dichtung einfach in den Hülsenkopf einzusetzen bzw. die Dichtung zu tauschen, wenn sie alt oder verschlissen ist. Der Metallring verleiht der Lasche eine hohe elastische Rückstellkraft, sodass diese mit einer gewissen Kraft an die Innenseite des oberen Hülsenkopfes drückt. Dadurch liegt sie dicht an diesem an. Durch die Vorsprünge, die zweckmäßigerweise durch Vorsprünge des Metallringes verstärkt sind, wird die Dichtung zuverlässig in Position gehalten.

Nach einer weiteren Ausgestaltung der Erfindung ist vorgesehen, dass die Ausnehmungen durch die Wand des Hülsenkopfs nach außen durchgehen und dass im Bereich dieser Ausnehmungen außen ein Markierungsring vorgesehen ist, der nach innen gerichtete Vorsprünge aufweist, die in die Ausnehmungen eingreifen. Dadurch werden mehrere Vorteile erzielt. Wenn die Ausnehmungen nach außen durchgehen, können diese Ausnehmungen durch Vorsprünge der Spritzgussform erzeugt werden, die an der Außenseite der Form angebracht sind. (Vorsprünge am Kern der Form bedingen, dass der Kern kompliziert kollabierbar ist.) Damit die Ausnehmungen nicht von außen sichtbar sind, werden sie durch einen in verschiedenen Farben erhältlichen Markierungsring abgedeckt. Die meisten Rohrpostbetreiber verlangen leicht unterscheidbare Gruppen von Hülsen, meist wird diese Unterscheidbarkeit durch verschiedene Farben bewirkt. Dies bewirkt, dass immer Hülsen in verschiedenen Farben auf Lager gehalten werden müssen. Durch die Verwendung des Markierungsringes genügt es, eine Farbe von Hülsen auf Lager zu haben, und nur die relativ kleinen, billigen Markierungsringe müssen in verschiedenen Farben vorrätig sein. Sie können einfach auf die Hülsen aufgesteckt werden, wobei sie mit ihren Vorsprüngen in die Ausnehmungen, die für die Dichtung vorgesehen sind, einrasten. Gleichzeitig werden dadurch die unschönen Ausnehmungen abgedeckt.

Alternativ dazu kann aber auch vorgesehen sein, dass die Dichtung im Deckel angeordnet ist und in Schließstellung am Rand des Hülsenkopfes anliegt. Dies ist herstellungstechnisch einfacher, allerdings ist ein nachträglicher Einbau der Dichtung schwieriger.

Vorzugsweise weist der Hülsenkopf von den Stirnseiten ausgehende abgewinkelte Nuten auf, in die Vorsprünge des Hülsenrohres eingreifen, sodass die Hülsenköpfe in der Art eines Bajonettverschlusses mit dem Hülsenrohr verbunden sind. Das Hülsenrohr wird dabei zweckmäßigerweise auch im Spritzgussverfahren hergestellt. Würden nachträglich in das Hülsenrohr Löcher gebohrt oder Nuten gefräst werden, ergäben sich im Kunststoff Spannungen, die leicht zu einem Bruch des Hülsenrohres führen könnten. Es werden daher Vorsprünge mitgespritzt. Wenn der Außendurchmesser der Hülse geringfügig größer ist als der Innendurchmesser der Hülsenköpfe, können die Hülsenköpfe immer noch aufgeschoben werden, wenn sie zuvor angewärmt wurden (wegen der thermischen Expansion). Sie können dann in der Art eines Bajonettverschlusses durch geringe Verdrehung miteinander verriegelt werden. Nach dem Abkühlen der Hülsenköpfe liegen diese dicht am Hülsenrohr an. Vorteilhaft ist dabei, dass kein Klebstoff notwendig ist und dass die Hülsenköpfe auch später wieder vom Hülsenrohr getrennt werden können. Dies ist nicht nur für Reparaturen von Hülsen wichtig, es ist dadurch auch möglich, die Hülsenköpfe von den Hülsenrohren zu trennen, was für die Wiederverwertung des Kunststoffes wichtig ist (Hülsenrohr und Hülsenköpfe bestehen meist aus verschiedenen Materialien).

Es ist zwar auch in DE 297 08 204 U1 eine Verbindung der Hülsenköpfe mit dem Hülsenrohr ohne Klebstoff beschrieben. Gemäß dieser Schrift sind aber an den Hülsenköpfen nach innen vorspringende Rastnocken vorgesehen, die in entsprechende Rastlöcher des Büchsenrohres einrasten. Damit muss aber zwangsläufig während des Aufschiebens der Hülsenköpfe ein Spalt zwischen Hülsenkopf und Hülse entstehen (für die vorspringenden Rastnocken), der auch nach dem Einrasten der Rastnocken kaum mehr vollständig zum Verschwinden gebracht werden kann. Damit ist diese bekannte Verbindung nicht zuverlässig dicht.

Es ist weiters zweckmäßig, wenn im oberen Hülsenkopf im Bereich der Achse eine Aussparung zur Aufnahme eines Miniaturschlosses vorgesehen ist und wenn eine entsprechende Öffnung im Deckel vorgesehen ist, die in Schließstellung des Deckels mit der Aussparung fluchtet. Dadurch können die Hülsen gegen unbefugtes Öffnen gesichert werden. Es gibt im Handel sogenannte Miniaturschlösser, die analog zu Zylinderschlössern aufgebaut sind. Sie haben insbesondere auch einen Schließbart, der mit dem Zylinder verbunden ist und bei abgezogenem Schlüssel vom Grundkörper des Schlosses seitlich vorsteht. Solch ein Schloss kann in die Aussparung eingesetzt werden, indem der Schließbart mit dem Schlüssel soweit verdreht wird, dass er innerhalb der Kontur des Grundkörpers liegt. Wenn das Schloss eingesetzt wird, wird der Schlüssel (und damit der Zylinder und die Rastnase) zurückgedreht, dann kann der Schlüssel abgezogen werden. Der Schließbart steht nun seitlich vor, sodass das Schloss nicht herausgezogen werden kann. Da es auch durch den Deckel durchgeht, kann dieser nicht geöffnet werden. Dazu muss erst das Schloss wieder herausgezogen werden, was aber nur mit dem Schlüssel möglich ist.

Nach einer weiteren Ausgestaltung ist vorgesehen, dass im Deckel eine Aussparung zur Aufnahme eines Datenträgers vorgesehen ist, wobei diese Aussparung aus einem kleineren Rechteck besteht, das etwa in der Mitte des Deckels liegt, und dass an dieses Rechteck ein größeres Rechteck anschließt, das von außen durch einen Schlitz zugänglich ist.

Die Verwendung von Datenträgern bei Rohrposthülsen ist z.B. aus der DE 40 04 018 C2 bekannt. Daraus ist auch bekannt, die Datenträger an der Stirnseite der Hülse anzuordnen. Aufgrund der Informationen, die in diesem Datenträger gespeichert sind, kann die Hülse identifiziert oder ihr Fahrziel festgestellt werden.

Derartige Datenträger sind aber in verschiedenen Größen im Handel, was die Nachrüstung vorhandener Hülsen erschwert. Aus diesem Grunde ist erfindungsgemäß vorgesehen, dass zwei verschieden große Rechtecke für zwei verschiedene Größen von Datenträgern ausgespart bleiben. Das kleinere Rechteck liegt etwa in der Mitte des Deckels. Dies hat den Vorteil, dass der Datenträger immer etwa in der Mitte Rohres liegt, wenn die Hülse durch ein Rohr fährt. Dadurch hat der Datenträger von der seitlich des Rohres angeordneten Lesestation immer etwa den gleichen Abstand, was wichtig ist, denn bei einem kleinen Datenträger ist auch die Sendespule und damit die abgestrahlte Sendeleistung klein. Es wäre ungünstig, einen kleinen Datenträger seitlich anzubringen, weil er dann unter Umständen fast einen ganzen Rohrdurchmesser von der Empfangsstation entfernt vorbeifahren könnte. Das größere Rechteck liegt außermittig, was aber in der Praxis kein Problem ist, weil die größeren Datenträger auch eine größere Sendeleistung abstrahlen, sodass ein größerer Abstand zur Empfangsstation nichts ausmacht.

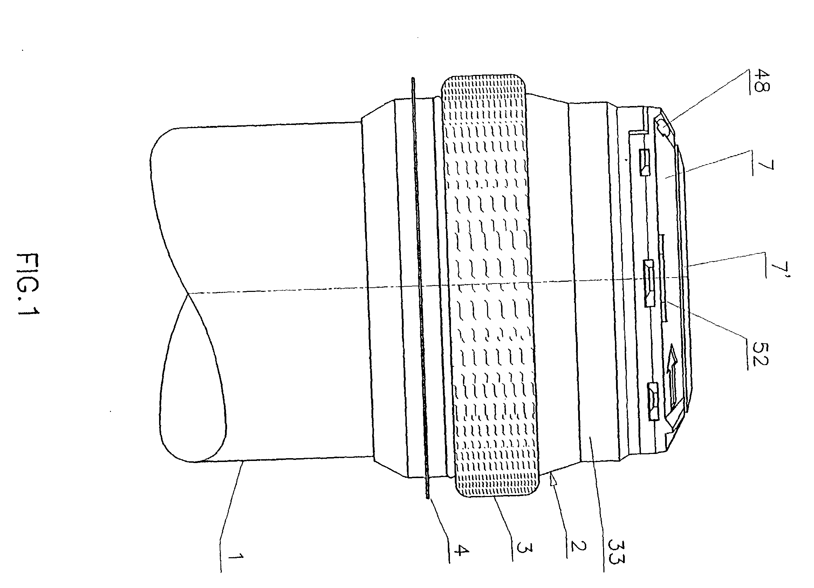

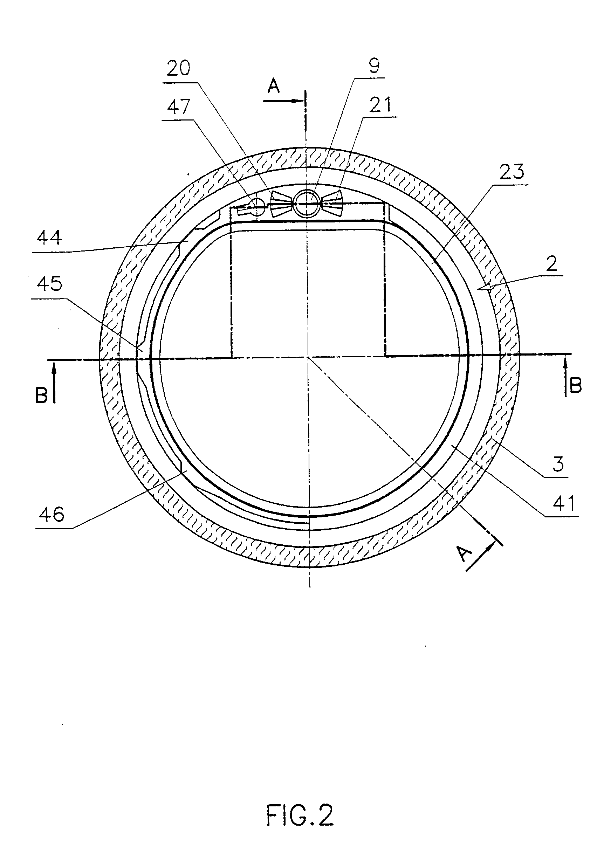

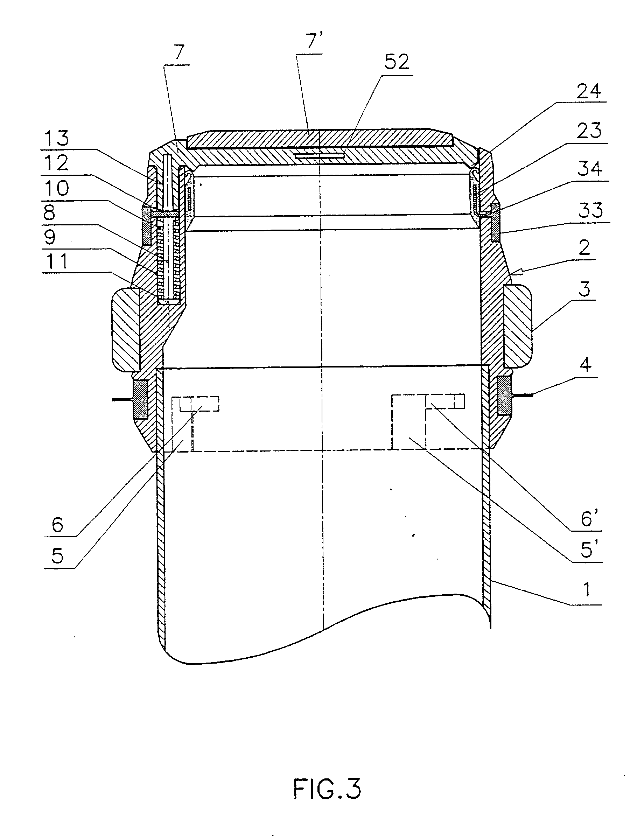

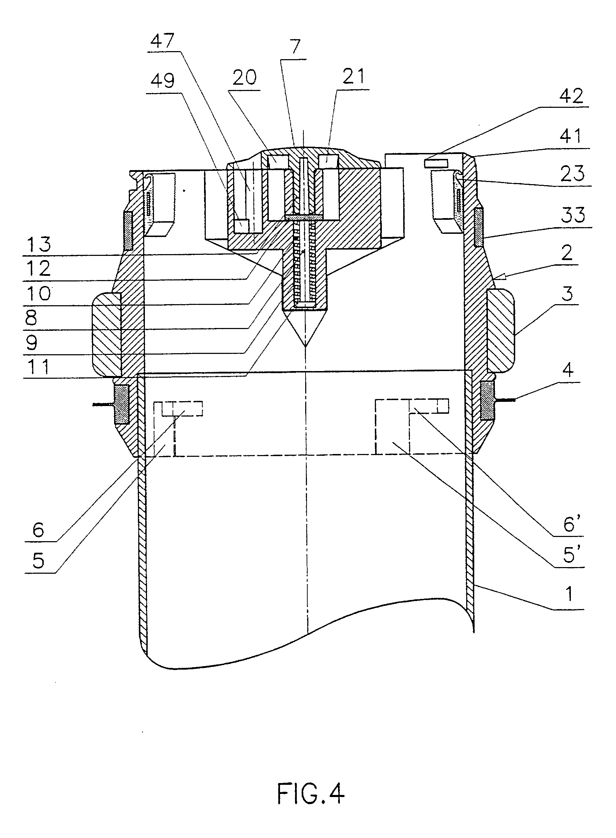

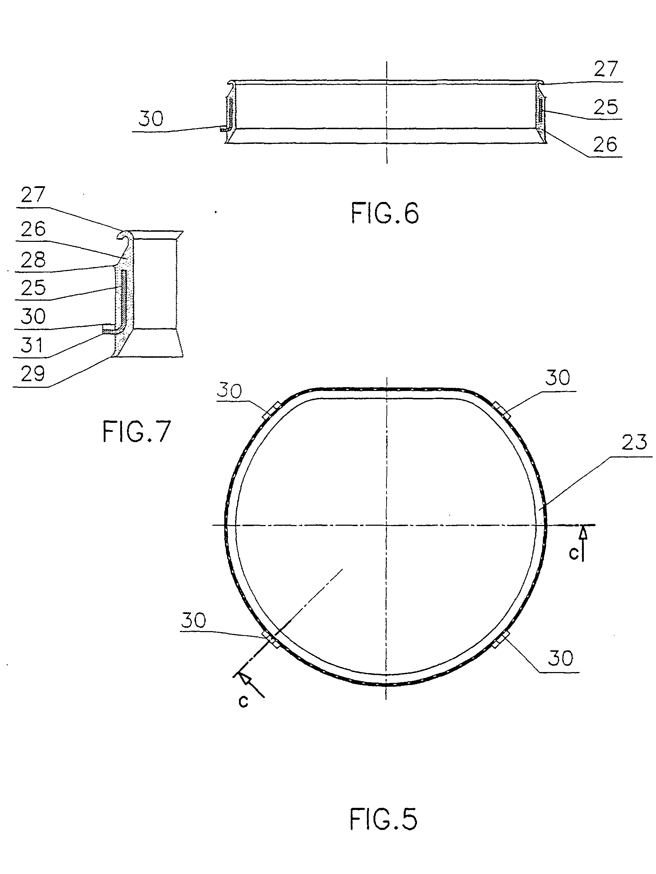

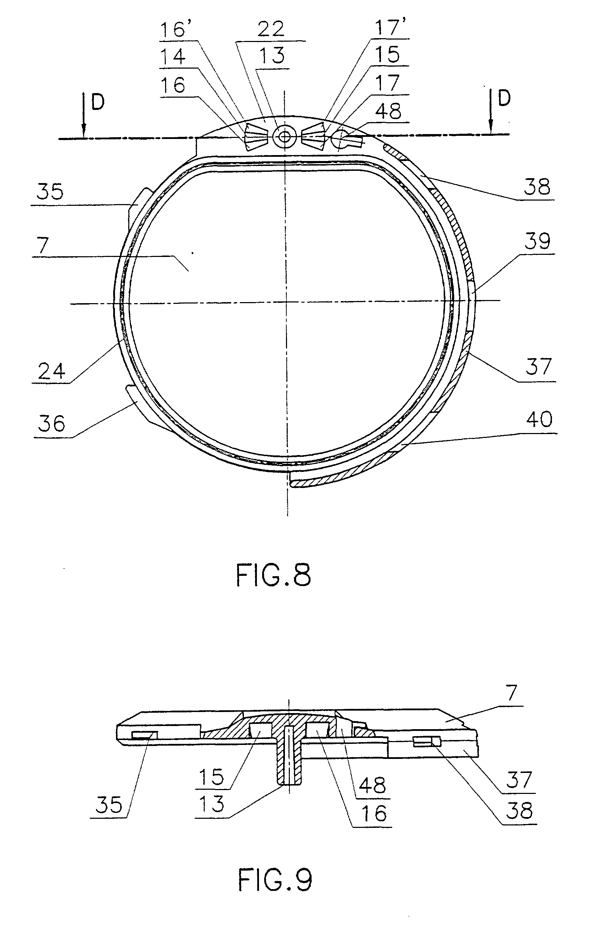

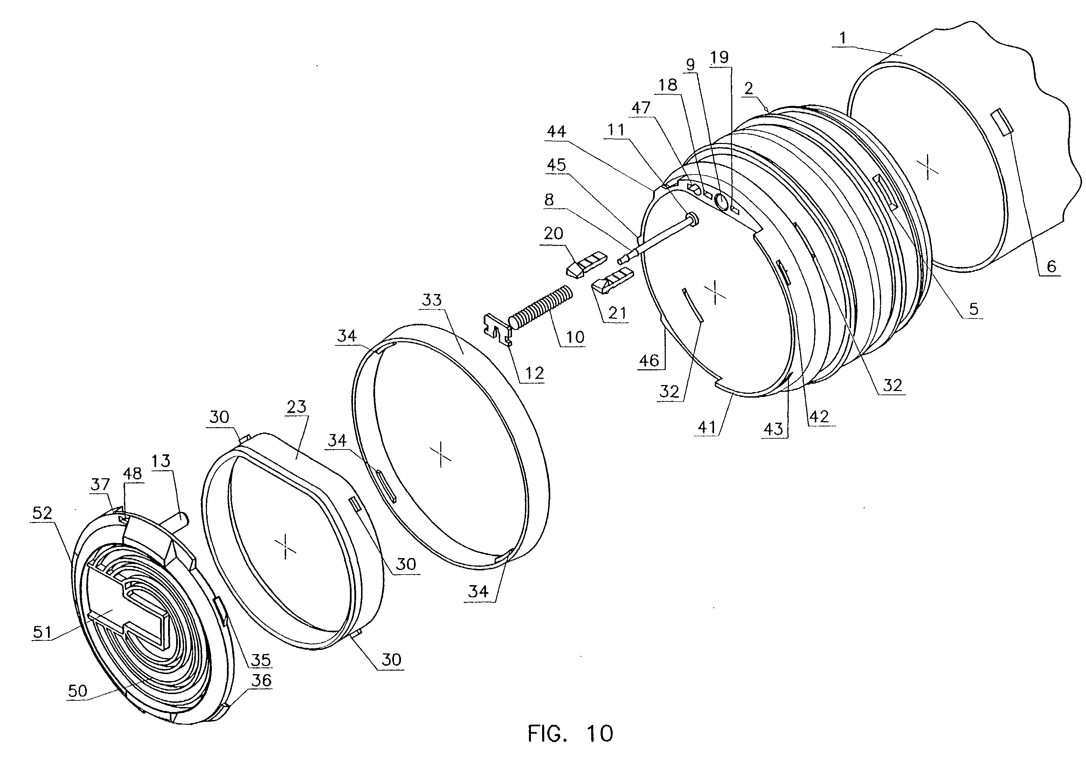

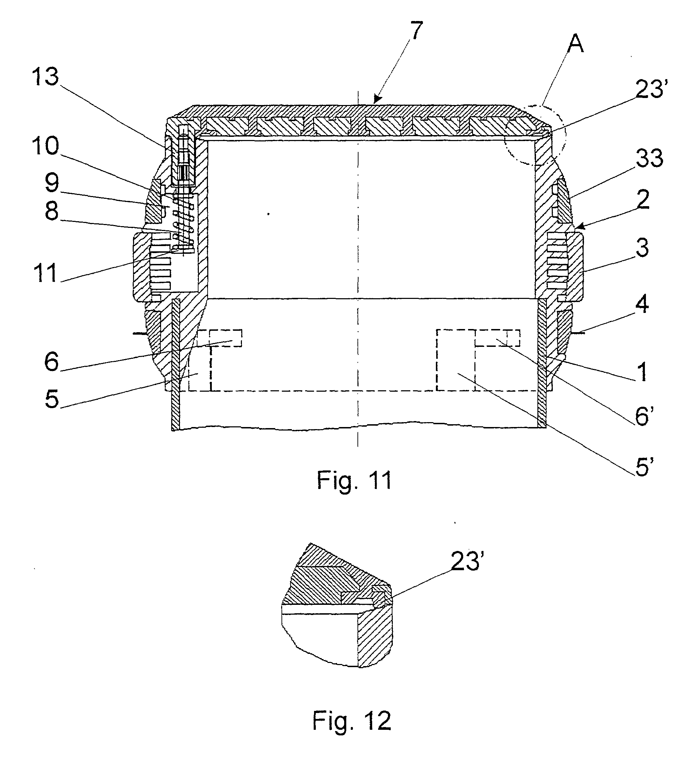

Anhand der beiliegenden Figuren wird die Erfindung näher erläutert. Es zeigt: Fig. 1 den oberen Teil einer erfindungsgemäßen Hülse in Seitenansicht; Fig. 2 eine Draufsicht auf eine Hülse gemäß Fig. 1 mit abgenommenem Deckel; Fig. 3 einen Schnitt entlang der Linie A-A in Fig. 2; Fig. 4 einen Schnitt entlang der Linie B-B in Fig. 2; Fig. 5 eine Dichtung in Draufsicht; Fig. 6 eine Dichtung entlang der Linie C-C in Fig. 5; Fig. 7 den linken Teil von Fig. 6 in vergrößerter Darstellung; Fig. 8 den Deckel von innen; Fig. 9 einen Schnitt entlang der Linie D-D in Fig. 8; Fig. 10 eine axonometrische Explosionsdarstellung eines oberen Hülsenkopfes mit abgenommenem Laufring und abgenommenem Treibring; Fig. 11 eine Ansicht analog zu Fig. 3, jedoch einer anderen Ausführungsform; und Fig. 12 Detail A von Fig. 11 in vergrößerter Ansicht.

Die erfindungsgemäße Hülse weist ein zylindrisches Hülsenrohr 1 (s. Fig. 1) auf, auf das ein oberer Hülsenkopf 2 aufgesetzt ist. Zu diesem Zweck weist der Hülsenkopf 2 L-förmige Nuten 5, 5' (s. Fig. 3) auf, die an seiner Stirnseite enden. In den abgewinkelten Schenkel des L ragen Vorsprünge 6, 6' des Hülsenrohres 1. Diese Vorsprünge 6,6' verhindern, dass der Hülsenkopf 2 axial vom Hülsenrohr 1 abgezogen werden kann. Der Hülsenkopf 2 ist mit dem Hülsenrohr 1 außerdem durch einen Presssitz verbunden, d.h. der Außendurchmesser des Hülsenrohres 1 ist geringfügig größer als der Innendurchmesser der entsprechenden Fläche des Hülsenkopfes 2. Dadurch ist die Verbindung zwischen Hülsenkopf 2 und Hülsenrohr 1 flüssigkeitsdicht. Zum Anbringen und Abnehmen des Hülsenkopfes kann man diesen erwärmen, sodass aufgrund seiner thermischen Ausdehnung sein Innendurchmesser geringfügig größer als der Außendurchmesser des Hülsenrohres wird. In analoger Weise ist am anderen Ende des Hülsenrohres ein unterer Hülsenkopf befestigt.

Auf dem oberen Hülsenkopf 2 ist ein Laufring 3 (s. z.B. Fig. 1 und 3) angebracht, dessen Außendurchmesser dem Innendurchmesser des Rohres, in dem die Hülse laufen soll, entspricht. Der untere Hülsenkopf weist einen analogen Laufring auf. Die beiden Laufringe dienen dazu, die Hülse im Rohr zu führen. Am oberen Hülsenkopf 2 ist außerdem ein Treibring 4 vorhanden, der im Rohr dichtend anliegt und verhindert, dass Druckluft an der Hülse vorbeiströmt. Die Druckluft steht somit vollständig zum Antrieb der Hülse zur Verfügung.

Der obere Hülsenkopf 2 weist einen Deckel 7 auf, mit dem eine Achse 8 (s. Fig. 3 und 4) starr verbunden ist. Diese Achse 8 ist in einem Loch 9 des Hülsenkopfes 2 drehbar gelagert. Dieses Loch 9 weist keine Verbindung zum Inneren der Hülse auf; dies ist wegen der Dichtheit der Hülse wichtig. Das Loch hat einen größeren Durchmesser als die Achse 8, damit Platz für eine Feder 10, die als Druckfeder ausgebildet ist, geschaffen wird. Diese Feder 10 stützt sich an einem verbreiterten Fuß 11 der Achse 8 ab. Der Außendurchmesser des Fußes 11 entspricht dem Durchmesser des Lochs 9, damit die Achse 8 möglichst präzise geführt ist. Mit ihrem anderen Ende stützt sich die Feder an einer Druckplatte 12 ab, die zur Montage und Demontage des Deckels 7 von außen in das Loch 9 eingeschoben bzw. daraus herausgezogen werden kann. Auf diese Weise ist der Deckel 7 durch die Feder 10 nach unten vorgespannt. Oberhalb der Druckplatte ist die Achse 8 von einem Ansatz 13 des Deckels 7 umgeben; dieser dient nicht nur zur starren Fixierung der Achse 8, sondern auch zur präzisen Lagerung des Deckels 7 im Loch 9. Deshalb ist sein Außendurchmesser dem Durchmesser des Lochs 9 angepasst. Der Deckel ist also nicht nur um seine Achse 8 schwenkbar, sondern auch entgegen der Kraft der Feder 10 in Richtung der Achse 8 verschiebbar, also vom Hülsenkopf 2 abhebbar.

Seitlich neben dem Ansatz 13, also neben der Achse 8, weist der Deckel 7 zwei Vertiefungen 14, 15 (s. Fig. 8,9) auf. Diese Vertiefungen sind durch schräge Gleitflächen 16,16' bzw. 17,17' begrenzt. Analog weist der Hülsenkopf 2 (s. Fig. 10) neben dem Loch 9 zwei Öffnungen 18,19 auf, in die zwei Hebekeile 20,21 eingesetzt sind. Bei geschlossenem Deckel 7 liegen die Hebekeile 20,21 innerhalb der Vertiefungen 14,15 (s. Fig. 4). Wird der Deckel 7 um die Achse 8 verschwenkt, wird der Deckel 7 gleichzeitig entgegen der Kraft der Feder 10 angehoben, weil der Deckel 7 mit den Gleitflächen 16' und 17 (s. Fig. 8) auf den Hebekeilen 20,21 (s. Fig. 4) aufgleitet, bis diese aus den Vertiefungen 14,15 (s. Fig. 8,9) heraußen sind. Der Deckel 7 wird dabei genau um die Höhe der Hebekeile 20,21 (s. Fig. 10) axial bewegt. Bei der weiteren Schwenkbewegung gleiten dann die Hebekeile 20,21 auf der planen Fläche 22 (s. Fig. 8), die den Ansatz 13 umgibt.

Dadurch, dass die Anordnung der Vertiefungen 14,15und der Hebekeile symmetrisch zur Achse 8 und damit zur Feder 10 ist, wird die Achse 8 nicht auf Biegung belastet und der Deckel 7 ist immer genau normal zur Längsachse der Hülse.

Die Hebekeile müssen natürlich keine getrennten Bauteile sein, sie können auch zusammen mit dem Hülsenkopf gespritzt werden. Auch könnte die Anordnung von Vertiefungen und Hebekeilen umgekehrt getroffen sein, d.h. die Hebekeile können auch auf dem Deckel und die Vertiefungen im Hülsenkopf vorgesehen sein. Die Hebekeile und die Vertiefungen können auch anders als hier dargestellt geformt sein, z.B. halbkugelförmig.

An der Innenseite des Hülsenkopfes 2 ist eine Dichtung 23 (s. Fig. 3 und 4) angebracht. Bei geschlossenem Deckel 7 liegt dieser mit einem Vorsprung 24 an der Dichtung 23 an. Dieser Vorsprung kann im Querschnitt dreieckig oder trapezförmig sein. Beim Öffnen des Deckels wird dieser - wie eben beschrieben - zunächst auch axial bewegt, sodass sich dieser Vorsprung 24 von der Dichtung 23 löst. Danach erfolgt die restliche Schwenkbewegung, ohne dass die Dichtung 23 in irgendeiner Weise belastet würde.

Der Aufbau der Dichtung 23 wird nun anhand der Fig. 5-7 erklärt. Es ist ein Metallring 25 aus Federstahl vorhanden, der allseitig von Dichtungsmaterial umgeben ist, sodass sich eine Lasche 26 ergibt. Die eigentliche Dichtfläche 27 ist in den Fig. 6 und 7 oben zu sehen. Sie wirkt mit dem Deckel 7 (s. Fig. 3 und 4) zusammen. Es sind außerdem an der Lasche 26 Dichtlippen 28 und 29 (s. Fig. 7) vorhanden, die eine Abdichtung zum Hülsenkopf 2 (s. Fig. 3 und 4) bewirken. Die Dichtung 23 weist vier Vorsprünge 30 (s. Fig. 5) auf, in die zur Verstärkung entsprechende umgebogene Abschnitte bzw. Vorsprünge 31 (s. Fig. 7) des Metallrings 25 ragen. Diese Vorsprünge 30 rasten in entsprechende Ausnehmungen 32 des Hülsenkopfes ein (s. Fig. 10). Auf diese Weise wird die Dichtung 23 zuverlässig in Position gehalten. Durch die Dichtlippen 28 und 29 (s. Fig. 7) wird außerdem eine Abdichtung gegenüber dem Hülsenkopf 2 (s. Fig. 10) erzielt, und zwar zu beiden Seiten der Ausnehmungen 32, sodass durch diese keine Flüssigkeit nach außen gelangen kann.

Außerhalb des Hülsenkopfes 2 ist ein Markierungsring 33 vorgesehen. Er hat an seiner Innenseite Vorsprünge 34, die in die Ausnehmungen 32 eingreifen (s. auch Fig. 3). Dadurch wird dieser in Position gehalten und deckt die Ausnehmungen 32 ab. Der Markierungsring 33 kann in verschiedenen Farben gefertigt werden und so eine Kennzeichnung der Hülsen bewirken.

Wichtig für eine zuverlässige Abdichtung der Hülse ist, dass der Deckel 7 in Achsrichtung fixiert ist, wenn er geschlossen ist. Sonst könnte es leicht geschehen, dass das zu transportierende Gut (z.B. beim Abbremsen) so stark gegen den Deckel 7 drückt, dass dieser entgegen der Kraft der Feder vom Hülsenkopf 2 abhebt. Zu diesem Zweck weist der Deckel 7 (s. Fig. 8-10) in Schließrichtung vorne zwei Vorsprünge 35,36 und in Schließrichtung hinten einen etwa halbzylindrischen Ansatz 37 mit Öffnungen 38,39,40 auf. Der obere Rand des Hülsenkopfes 2 (s. Fig. 10) weist einen komplementären etwa halbzylindrischen Ansatz 41 auf, der in Schließstellung des Deckels 7 mit dem Ansatz 37 einen vollständigen Zylinder ergibt. Der Ansatz 41 hat Öffnungen 42 und 43 zur Aufnahme der Vorsprünge 35,36. Im Bereich außerhalb des Ansatzes 41 sind am oberen Rand des Hülsenkopfes 2 drei Vorsprünge 44,45,46 vorgesehen, die bei geschlossenem Deckel in die Ausnehmungen 38,39,40 (s. Fig. 8) des Deckels eingreifen. Der Deckel 7 ist somit an fünf über den Umfang verteilten Stellen mit dem Hülsenkopf 2 verriegelt, was eine unbeabsichtigte axiale Verschiebung des Deckels 7 unmöglich macht.

Die Vorsprünge 35 und 36 müssen an ihrer Oberseite, die Vorsprünge 44,45,46 an ihrer Unterseite leicht abgeschrägt sein, um das Anheben des Deckels 7 während der Schwenkbewegung des Öffnens zu ermöglichen. Diese Neigung ist aber so gering, dass die Verriegelung zuverlässig selbsthemmend bezüglich axial wirkender Kräfte ist.

Der Hülsenkopf 2 (s. Fig. 2 und 4) weist an seiner oberen Stirnfläche, nahe dem Lochs 9 für die Achse 8, eine Aussparung 47 zur Aufnahme eines Miniaturschlosses auf. Der Deckel 7 (s. Fig. 8 und 9) weist eine entsprechende Öffnung 48 auf, die durch den Deckel 7 hindurchgeht und mit der Aussparung 47 fluchtet, wenn der Deckel 7 geschlossen ist. Die Aussparung 47 (s. Fig. 4) weist unten eine Verbreiterung 49 auf, die den Schließbart des Miniaturschlosses aufnimmt, wenn dieser gegenüber dem Gehäuse des Miniaturschlosses seitlich vorsteht (Schließstellung). In dieser Stellung kann das Miniaturschioss nicht entfernt werden. Da es durch die Öffnung 48 des Deckels 7 hindurchgeht, kann der Deckel 7 nicht verschwenkt werden. Eine axiale Verschiebung des Deckels 7 ist infolge der oben beschriebenen fünf-fachen Verriegelung unmöglich. Die Hülse ist daher zuverlässig versperrt.

Schließlich wird noch der Aufbau des Deckels 7 beschrieben. Um Material zu sparen und das Gewicht gering zu halten, ist er nicht voll ausgebildet, sondern er weist zahlreiche Ausnehmungen auf, zwischen denen konzentrische Verstärkungsrippen 50 (s. Fig. 10) stehen. Diese Rippen werden durch einen Prallpolster 7' (s. Fig. 1 und 3) abgedeckt, der aus einem entsprechend nachgiebigem Material besteht, um den Anprall der Hülse zu dämpfen. Im Deckel 7 (s. Fig. 10) ist eine Aussparung 51 zur Aufnahme eines Datenträgers vorgesehen. Diese Aussparung 51 besteht aus einem kleineren Rechteck, das etwa in der Mitte des Deckels 7 liegt, an das ein größeres Rechteck anschließt, das von außen durch einen Schlitz 52 (s. auch Fig. 1 und 3) zugänglich ist. Auf diese Weise wird Platz für Datenträger zweier unterschiedlicher Größen geschaffen. Ein kleiner Datenträger kann etwa in der Mitte des Deckels angebracht werden, alternativ (oder auch zusätzlich) kann ein größerer Datenträger am Rand des Deckels im größeren Rechteck untergebracht werden. Der Datenträger kann jederzeit nachgerüstet werden, weil er ja durch den Schlitz 52 eingeschoben werden kann.

Die Ausführungsform gemäß Fig. 11 unterscheidet sich von der bisher beschriebenen dadurch, dass die Dichtung 23' am Deckel 7 angebracht ist und nicht im Hülsenkopf 2. Sie liegt in der Schließstellung am Rand des Hülsenkopfes 2 an. Man sieht unmittelbar aus der Fig. 11 (und dem vergrößerten Detail A in Fig. 12), dass die Dichtung eine wesentlich einfachere Form hat und keinen Metallring als Verstärkung benötigt. Allerdings kann die Dichtung 23' nicht so einfach eingesetzt und herausgenommen werden wie die oben beschriebenen Dichtung 23.

## Patentansprüche

1. Hülse für eine Rohrpostanlage, bestehend aus einem zylindrischen Hülsenrohr (1), einem unteren Hülsenkopf und einem oberen Hülsenkopf (2), wobei der untere und der obere Hülsenkopf (2) jeweils einen Gleitring (3) aufweisen und wobei der obere Hülsenkopf (2) einen Deckel (7) aufweist, der um eine Achse (8), die am Rand der Hülse parallel zur Längsachse der Hülse angeordnet ist, schwenkbar gelagert ist, wobei weiters zwischen dem Deckel (7) und dem oberen Hülsenkopf (2) eine Dichtung (23) vorgesehen ist und wobei der Deckel (7) bzw. der obere Hülsenkopf (2) mehrere über den Umfang verteilte Vorsprünge (35,36; 44,45,46) normal zur Längsachse der Hülse aufweist, die bei geschlossenem Deckel (7) in mehrere Ausnehmungen (42,43; 38,39,40) im oberen Hülsenkopf (2) bzw. im Deckel (7) eingreifen, um den Deckel (7) in Richtung der Längsachse zu fixieren.

2. Hülse nach Anspruch 1, **dadurch gekennzeichnet, dass** der Deckel (7) in Schließrichtung vorne einen oder mehrere Vorsprünge (35,36) und in Schließrichtung hinten eine oder mehrere Ausnehmungen (38,39,40) hat, wobei an den entsprechenden Stellen im Hülsenkopf (2) die zugehörige Ausnehmung bzw. die zugehörigen Ausnehmungen (42,43) und der zugehörige Vorsprung bzw. die zugehörigen Vorsprünge (44,45,46)vorgesehen sind.

3. Hülse nach Anspruch 1 oder 2, **dadurch gekennzeichnet, dass** der Deckel (7) nicht nur um die Achse (8) drehbar, sondern auch in Richtung der Achse (8) verschiebbar ist, dass er durch eine Feder (10) in Richtung zum Hülsenrohr (1) vorgespannt ist und dass im Deckel (7) oder im oberen Hülsenkopf (2) zumindest eine schräge Gleitfläche (16,16';17,17') vorgesehen ist, in die bei geschlossenem Deckel (7) ein Vorsprung (Hebekeile 20,21) des oberen Hülsenkopfes (2) bzw. des Deckels (7) ragt, sodass beim Verschwenken in die Offenstellung der Deckel (7) vom oberen Hülsenkopf (2) abhebt.

4. Hülse nach Anspruch 3, **dadurch gekennzeichnet, dass** zwei Gleitflächen (16,16';17,17') zu beiden Seiten der Achse (8) im Deckel (7) vorgesehen sind, die mit Hebekeilen (20,21) im oberen Hülsenkopf (2) zusammenwirken.

5. Hülse nach einem der Ansprüche 1 bis 4, **dadurch gekennzeichnet, dass** die Dichtung (23) im oberen Hülsenkopf (2) angeordnet ist und einen Abstand zum oberen Rand des oberen Hülsenkopfes (2) aufweist, und dass der Deckel (7) einen Vorsprung (24) aufweist, der in der Schließstellung des Deckels (7) auf die Dichtung (23) drückt.

6. Hülse nach Anspruch 5, **dadurch gekennzeichnet, dass** die Dichtung (23) eine dem Deckel (7) zugekehrten Dichtfläche (27) aufweist, von der eine Lasche (26) zur dichtenden Anlage am oberen Hülsenkopf (2) ausgeht, dass die Lasche (26) Vorsprünge (30) aufweist, die zur Fixierung der Dichtung (23) in entsprechenden Ausnehmungen (32) im oberen Hülsenkopf (2) eingreifen, dass innerhalb der Lasche (26) ein Metallring (25) liegt und dass vorzugsweise in die Vorsprünge (30) der Dichtung (23) entsprechende Vorsprünge (31) des Metallringes (25) ragen.

7. Hülse nach Anspruch 6, **dadurch gekennzeichnet, dass** die Ausnehmungen (32) durch die Wand des Hülsenkopfs (2) nach außen durchgehen und dass im Bereich dieser Ausnehmungen (32) außen ein Markierungsring (33) vorgesehen ist, der nach innen gerichtete Vorsprünge (34) aufweist, die in die Ausnehmungen (32) eingreifen.

8. Hülse nach einem der Ansprüche 1-4, **dadurch gekennzeichnet, dass** die Dichtung (23') im Deckel (7) angeordnet ist und in Schließstellung am Rand des Hülsenkopfes (2) anliegt.

9. Hülse nach einem der Ansprüche 1-8, **dadurch gekennzeichnet, dass** der Hülsenkopf (2) von den Stirnseiten ausgehende abgewinkelte Nuten (5,5') aufweist, in die Vorsprünge (6,6') des Hülsenrohres (1) eingreifen, sodass die Hülsenköpfe (2) in der Art eines Bajonettverschlusses mit dem Hülsenrohr (1) verbunden sind.

10. Hülse nach einem der Ansprüche 1-9, **dadurch gekennzeichnet, dass** im oberen Hülsenkopf (2) im Bereich der Achse (8) eine Aussparung (47) zur Aufnahme eines Miniaturschlosses vorgesehen ist und dass eine entsprechende Öffnung (48) im Deckel (7) vorgesehen ist, die in Schließstellung des Deckels (7) mit der Aussparung (47) fluchtet.

11. Hülse nach einem der Ansprüche 1-10, **dadurch gekennzeichnet, dass** im Deckel (7) eine Aussparung (51) zur Aufnahme eines Datenträgers vorgesehen ist, wobei diese Aussparung (51) aus einem kleineren Rechteck besteht, das etwa in der Mitte des Deckels (7) liegt, und dass an dieses Rechteck ein größeres Rechteck anschließt, das von außen durch einen Schlitz (52) zugänglich ist.

## Claims

1. Sleeve for a pneumatic tube conveyor, consisting of a cylindrical sleeve tube (1), a lower sleeve head and an upper sleeve head (2), wherein the lower and the upper sleeve head (2) each have a slide ring (3) and wherein the upper sleeve head (2) has a cover (7) which is pivotally mounted about an axis (8) arranged parallel to the longitudinal axis of the sleeve at the edge of the sleeve, wherein a seal (23) is also provided between the cover (7) and the upper sleeve head (2) and wherein the cover (7) or the upper sleeve head (2) has distributed over the periphery a plurality of projections (35, 36; 44, 45, 46) normal to the longitudinal axis of the sleeve which, when the cover (7) is closed, engage in a plurality of recesses (42, 43; 38, 39, 40) in the upper sleeve head (2) or in the cover (7), to fix the cover (7) in the direction of the longitudinal axis.

2. Sleeve according to claim 1, **characterised in that** the cover (7) has one or more projections (35, 36) in the front in the closing direction and one or more recesses (38, 39, 40) at the back in the closing direction, wherein the associated recess or the associated recesses (42, 43) and the associated projection or the associated projections (44, 45, 46) are provided at the corresponding point in the sleeve head (2).

3. Sleeve according to claim 1 or 2, **characterised in that** the cover (7) is not only rotatable about the axis (8) but is also displaceable in the direction of the axis (8), **in that** it is biased by a spring (10) in the direction of the sleeve tube (1) and **in that** at least one oblique slide face (16, 16'; 17, 17') is provided in the cover (7) or in the upper sleeve head (2), into which a projection (lifting wedges 20, 21) of the upper sleeve head (2) or the cover (7) project when the cover (7) is closed, so the cover (7) lifts from the sleeve head (2) during pivoting into the open position.

4. Sleeve according to claim 3, **characterised in that** two slide faces (16, 16'; 17, 17') are provided on either side of the axis (8) in the cover (7) which cooperate with lifting wedges (20, 21) in the upper sleeve head (2).

5. Sleeve according to any one of claims 1 to 4, **characterised in that** the seal (23) is arranged in the upper sleeve head (2) and has a spacing from the upper edge of the upper sleeve head (2), and **in that** the cover (7) has a projection (24) which presses on the seal (23) in the closure position of the cover (7).

6. Sleeve according to claim 5, **characterised in that** the seal (23) has a sealing face (27) facing the cover (7), from which sealing face (27) a tab (26) issues for sealing contact on the upper sleeve head (2), **in that** the tab (26) has projections (30) which engage in corresponding recesses (32) in the upper sleeve head (2) to fix the seal (23), **in that** a metal ring (25) lies within the tab (26) and **in that** corresponding projections (31) of the metal ring (25) preferably project into the projections (30) of the seal (23).

7. Sleeve according to claim 6, **characterised in that** the recesses (32) pass outwardly through the wall of the sleeve head (2) and **in that** a marking ring (33) is provided on the outside in the region of these recesses (32), the marking ring (33) having inwardly directed projections (34) engaging in the recesses (32).

8. Sleeve according to any one of claims 1 to 4, **characterised in that** the seal (23') is arranged in the cover (7) and rests on the edge of the sleeve head (2) in the closure position.

9. Sleeve according to any one of claims 1 to 8, **characterised in that** the sleeve head (2) has bent grooves (5, 5') exiting from the end faces, into which grooves the projections (6, 6') of the sleeve tube (1) engage, so the sleeve heads (2) are connected to the sleeve tube (1) in the manner of a bayonet catch.

10. Sleeve according to any one of claims 1 to 9, **characterised in that** a recess (47) for receiving a miniature lock is provided in the upper sleeve head (2) in the region of the axis (8) and **in that** a corresponding aperture (48) which is flush with the recess (47) in the closure position of the cover (7) is provided in the cover (7).

11. Sleeve according to any one of claims 1 to 10, **characterised in that** a recess (51) is provided in the lid (7) to receive a data carrier, this recess (51) consisting of a smaller rectangle located approximately in the centre of the cover (7), and **in that** a larger rectangle which is accessible from outside through a slot (52) adjoins this rectangle.

## Revendications

1. Douille pour une installation de courrier pneumatique, formée d'un tube de douille (1) cylindrique, d'une tête de douille inférieure et d'une tête de douille (2) supérieure, la tète de douille inférieurs et la tête de douille supérieure (2) présentant chacune une bague de glissement (3) et la tête de douille supérieure (2) présentant un couvercle (7), monté à pivotement autour d'un axe (8) disposé sur le bord de la douille parallèlement à l'axe longitudinal de la douille, où, en outre, entre le couvercle (7) et la tête de douille supérieurs (2) est prévu un joint d'étanchéité (23) et où le couvercle (7) et/ou la tête de douille supérieure (2) présentent) une pluralité de saillies (35, 36 ; 44, 45, 46) réparties sur la périphérie, perpendiculairement à l'axe longitudinal de la douille, qui, lorsque le couvercle (7) est fermé, s'engagent dans une pluralité d'évidements (42, 43 ; 38, 39, 40) ménagés dans la tête de douille supérieure (2) respectivement dans le couvercle (7) pour fixer ce couvercle (7) dans la direction de l'axe longitudinal.

2. Douille selon la revendication I, **caractérisée en ce que** le couvercle (7) présente, à l'avant dans la direction de fermeture, une ou plusieurs saillies (35, 36) et, à l'arrière dans la direction de fermeture, un ou plusieurs évidements (38, 39, 40), dans la tête de douille (2), aux endroits correspondants étant prévus l'évidement afférent, respectivement les évidements (42, 43) afférents, et la saillie afférente ou les saillies (44, 45, 46) afférentes.

3. Douille selon la revendication 1 ou 2, **caractérisée en ce que** le couvercle (7) est non seulement susceptible de tourner autour de l'axe (8) mais est également déplaçable dans la direction de l'axe (8), **en ce que**, au moyen d'un ressort (10), il est précontraint dans la direction du tube de douille (1) et que, dans le couvercle (7) ou dans la tête de douille supérieurs (2), sont prévues au moins une face de glissement (16, 16' ; 17, 17') oblique, dans laquelle, lorsque le couvercle (7) est fermé, pénètre une saillie (coins de levage 20, 21) de la tête de douille supérieure (2), respectivement du couvercle (7), de manière que, lors d'un pivotement à la position d'ouverture, le couvercle (7) se soulève de la tête de douille supérieure (2).

4. Douille selon la revendication 3, **caractérisée en ce que** deux faces de glissement (16, 16' ; 17, 17') sont prévues sur les deux côtés de l'axe (8) dans le couvercle (7) et coopèrent avec des coins de levage (20, 21) situés dans la tête de douille supérieure (2).

5. Douille selon l'une des revendications 1 à 4, **caractérisée en ce que** le joint d'étanchéité (23) est disposé dans la tête de douille supérieure (2) et présente un espacement par rapport au bord supérieur de la tête de douille supérieure (2), et **en ce que** le couvercle (7) présents une saillie (24) pressant sur le joint d'étanchéité (23) lorsque le couvercle (7) se trouve à la position de fermeture.

6. Douille selon la revendication 5, **caractérisée en ce que** le joint d'étanchéité (23) présente une face d'étanchéité (27) tournée vers le couvercle (7), face d'étanchéité d'où part une patte (26) pour assurer un appui étanchéifiant sur la tête de douille supérieurs (2), **en ce que** la patte (26) présente des saillies (30) s'engageant dans des évidements (32) correspondants ménagés dans la tête de douille supérieure (2) afin de fixer le joint d'étanchéité (23), **en ce qu'**à l'intérieur de la patte (26) est placée une bague métallique (25) et **en ce que**, de préférence, des saillies (31), correspondant au joint d'étanchéité (23) et appartenant à la bague métallique (25), pénètrent dans les saillies (30).

7. Douille selon la revendication 6, **caractérisée en ce que** les évidements (32) sont continus vers l'extérieur à travers la paroi de la tête de douille (2), et **en ce que**, dans la zone de ces évidements (32), est prévue extérieurement une bague de marquage (33) présentant des saillies (34) tournées vers l'intérieur, qui s'engagent dans les évidements (32).

8. Douille selon l'une des revendications 1 à 4, **caractérisée en ce que** le joint d'étanchéité (23') est disposé dans le couvercle (7) et appuie sur le bord de la tête de douille (2), lorsqu'elle est en position de fermeture.

9. Douille selon l'une des revendications 1 à 8, **caractérisée en ce que** la tête de douille (2) présente des gorges (5, 5') coudées, partant des faces frontales, gorges dans lesquelles s'engagent des saillies (6, 6') du tube de douille (1), de sorte que les têtes de douille (2) sont reliées au tube de douille (1) à la manière d'une fermeture à baïonnette.

10. Douille selon l'une des revendications 1 à 9, **caractérisée en ce que** dans la tête de douille supérieure (2), dans la zone de l'axe (8), est prévu un évidement (47) devant recevoir une serrure miniature et **en ce qu'**une ouverture (48) correspondante est prévue dans le couvercle (7) et alignée avec l'évidement (47) lorsque le couvercle (7) est en position de fermeture.

11. Douille selon l'une des revendications 1 à 10, **caractérisée en ce que** dans le couvercle (7) est prévu un évidement (51) devant recevoir un support de données, cet évidement (51) étant formé d'un petit rectangle, situé à peu près au centre du couvercle (7), et **en ce que**, à ce rectangle, se raccorde un rectangle plus gros, accessible depuis l'extérieur en traversant une fente (52).
